# FASCICULE DE BREVET EUROPEEN

(11) **EP 3 545 453 B1**
(45) Date de publication et mention de la délivrance du brevet: **03.07.2024**
(21) Numéro de dépôt: 17794971.6
(22) Date de dépôt: 09.11.2017
(51) Int. Cl.: G06F 21/32, G06F 21/62, G07C 9/25, G07C 9/27

(54) **PROCEDE DE GENERATION D'UN ACCES POUR UNE ENTITE A DES DONNEES D'IDENTIFICATION D'UNE PERSONNE, DISPOSITIF DE GENERATION ET PROCEDE D'AUTHENTIFICATION ASSOCIES**
VERFAHREN ZUR GENERIERUNG EINES ZUGANGS FÜR EINE ENTITÄT ZU IDENTIFIKATIONSDATEN EINER PERSON, ZUGEHÖRIGES GENERIERUNGSGERÄT UND AUTHENTIFIZIERUNGSVERFAHREN
METHOD FOR GENERATING AN ACCESS FOR AN ENTITY TO IDENTIFICATION DATA OF A PERSON, ASSOCIATED GENERATION DEVICE AND AUTHENTICATION METHOD

(30) Priorité: 25.11.2016 FR 1601671
(43) Date de publication de la demande: 02.10.2019
(73) Titulaire: IN-IDT, 75116 Paris (FR)
(72) Inventeur: DURIEZ, Christophe, 78141 Velizy Cedex (FR); SENSFELDER, Bertrand, 78141 Velizy Cedex (FR)
(74) Mandataire: Brun, Philippe Alexandre Georges
(86) Numéro de dépôt international: PCT/EP2017/078682
(87) Numéro de publication internationale: WO 2018/095737

(56) Documents cités:
- FR-A1- 3 013 257
- Vasif Nabiyev ET AL: "Blakley'in Gizli Sir Paylasimina dayali DataMatrix ECC200 Kodlama", , 12 juin 2015 (2015-06-12), XP055387293, Extrait de l'Internet: URL:https://web.archive.org/web/2015061201 0618/http://www.emo.org.tr/ekler/82c329eee e40abe_ek.pdf [extrait le 2017-07-03]
- Anonymous: "Machine Reading Options for td1 size MRtds", , 7 avril 2011 (2011-04-07), XP055387297, Extrait de l'Internet: URL:https://www.icao.int/Security/mrtd/Dow nloads/TR-New%20Specifications%20td1/TR-Ne w%20specifications%20td1%20Card%20V%201%20 0%20(2).pdf [extrait le 2017-07-03]
- Bajpai Manisha ET AL: "Integration of 2 D Secure Barcode in Identity Cards:A New Approach", International Journal Of Engineering And Computer Science ISSN, vol. 2, no. 4, 4 April 2013 (2013-04-04), pages 1225-1233, XP055782660, Retrieved from the Internet: URL:http://www.ijecs.in/index.php/ijecs/ar ticle/view/709/632>

## Description

La présente invention concerne un procédé de génération d'un accès pour une entité à des données d'identification d'une personne, le procédé comprenant les étapes de :
- regroupement des données d'identification pour former un fichier d'identification,
- partitionnement du fichier d'identification en au moins deux fichiers élémentaires complémentaires entre eux,
- transformation de chaque fichier élémentaire en un code bidimensionnel.

Il est connu de l'état de la technique des documents d'identification sur lesquels sont imprimés des codes-barres bidimensionnels pour le stockage de données d'identification, tels que des informations biométriques ou des informations d'état civil d'une personne. L'accès aux données d'identification de la personne est réalisé par lecture des codes-barres imprimés sur le document d'identification.

En revanche, la mise à jour des données d'identification suppose de remplacer les codes-barres imprimés sur le document d'identification par de nouveaux codes-barres correspondants aux données mises à jour. Il est donc nécessaire de réaliser un nouveau document d'identification, ce qui est onéreux et chronophage.

En outre, en cas de perte ou de soustraction du document d'identification, les données d'identification contenues dans les codes-barres imprimés sur le document sont susceptibles d'être dérobés par un tiers.

Pour pallier ce dernier problème, une solution consiste à mémoriser les données d'identification de la personne au sein d'une base de données détenue par une entité, telle qu'une administration.

Cependant, dans le cas de données biométriques, une telle solution pose des problèmes de protection des données personnelles puisqu'elle implique nécessairement d'associer, dans une base de données, les données biométriques à d'autres éléments d'identité.

Le brevet FR 3 013 257 décrit un document d'identité comportant un code-barres bidimensionnel pour le stockage des données qui permette le codage d'un très grand volume de données tout en permettant une lisibilité simple du document d'identification.

Le document de Vasif Nabiyev intitulé « Baley'in Gizli Sir Paylasimina dayali Data matrix ECC200 Kodlama », XP055387293, divulgue un procédé de protection des données selon le partage secret de Blakley. Ce procédé consiste à partitionner une donnée à protéger en plusieurs fichiers codés et à affecter chaque fichier codé à un opérateur distinct.

Le document intitulé « Machine Reading Options for td1 size MRtds, XP055387297 concerne la lecture de documents avec un code MRZ.

Bajpai Manisha ET AL: "Integration of 2 D Secure Barcode in Identity Cards:A New Approach",International Journal Of Engineering And Computer Science ISSN, vol. 2, no. 4, 4 avril 2013 (2013-04-04), pages 1225-1233, XP055782660 (http://www.ijecs.in/index.php/ijecs/article/ view/709/632) divulgue l'utilisation de documents à code bidimensionnels.

Il existe donc un besoin pour une alternative permettant à une entité d'accéder de manière sécurisée aux données d'identification d'une personne.

A cet effet, l'invention a pour objet un procédé de génération d'un accès pour une entité à des données d'identification d'une personne, ladite entité ayant accès à des informations mémorisées dans une base de données centrale, le procédé comprenant les étapes de :
- regroupement des données d'identification pour former un fichier d'identification (F_{ID}),
- partitionnement du fichier d'identification (F_{ID}) en au moins deux fichiers élémentaires (F_{ID}ⁱ) complémentaires entre eux,
- transformation de chaque fichier élémentaire (F_{ID}ⁱ) en un code bidimensionnel,
dans lequel le procédé comprend, en outre, une étape de répartition des codes bidimensionnels en au moins deux groupes de codes bidimensionnels, le premier groupe de codes bidimensionnels et le deuxième groupe de codes bidimensionnels étant mémorisés sur des supports distincts, le support mémorisant le premier groupe de codes bidimensionnels étant destiné à être détenu par la personne et le support mémorisant le deuxième groupe de codes bidimensionnels étant accessible par l'entité, les données d'identification de la personne étant accessibles seulement lors de la réunion des premier et deuxième groupes de codes bidimensionnels mémorisés sur chacun desdits supports. , Le deuxième groupe de codes bidimensionnels est envoyé et mémorisé dans la base de données centrale.

Suivant des modes de mise en oeuvre particuliers, le procédé de génération comprend une ou plusieurs des caractéristiques suivantes, prises isolément ou suivant toutes les combinaisons techniquement possibles :
- le procédé comprend une étape de cryptage d'au moins une donnée d'identification, le fichier d'identification étant obtenu à partir de la ou des données d'identification cryptées et, le cas échéant, des autres données d'identification non cryptées ;
- le procédé comprend une étape d'assignation d'une signature à au moins une donnée d'identification, le fichier d'identification étant obtenu à partir de la ou des données d'identification signées et, le cas échéant, des autres données d'identification non signées ;

- le procédé comprend, avant l'étape de répartition, une étape d'assignation d'une signature commune à l'ensemble des codes bidimensionnels ;
- le procédé comprend, avant l'étape de répartition, une étape de cryptage d'au moins un code bidimensionnel ou de l'ensemble des codes bidimensionnels ;
- le procédé comprend, avant l'étape de transformation, une étape d'ajout d'une information d'ordonnancement à chaque fichier élémentaire, les informations d'ordonnancement étant représentatives de l'ordre de concaténation des fichiers élémentaires pour former le fichier d'identification, l'étape de transformation comprenant, en outre, le codage sur chaque code bidimensionnel de l'information d'ordonnancement ajoutée au fichier élémentaire correspondant ;
- le procédé comprend, lors de l'étape de répartition, l'affectation d'un identifiant commun au premier et au deuxième groupes de codes bidimensionnels ;
- le procédé comprend une étape de mise à jour des codes bidimensionnels lorsqu'une nouvelle donnée d'identification de la personne est disponible, l'étape de mise à jour comprenant la génération d'au moins deux codes bidimensionnels additionnels à partir de la nouvelle donnée selon le procédé de génération tel que décrit précédemment, l'étape de mise à jour comprenant, en outre, la mémorisation, d'une part, du premier groupe de codes bidimensionnels et de l'un des codes additionnels générés sur un support destiné à être détenu par la personne et, d'autre part, de l'autre code additionnel généré sur un support accessible par l'entité.

L'invention concerne, également, un dispositif de génération d'un accès pour une entité à des données d'identification d'une personne, le dispositif comprenant :
- une unité de recueil des données d'identification de la personne,
- une unité de traitement de données propre à mettre en oeuvre le procédé de génération tel que décrit précédemment.

L'invention concerne, en outre, un procédé d'authentification d'une personne par une entité, la personne détenant un premier groupe de codes bidimensionnels, l'entité ayant accès à un deuxième groupe de codes bidimensionnels, le premier groupe et le deuxième groupe de codes bidimensionnels étant obtenus par le procédé de génération tel que décrit précédemment, le deuxième groupe de codes bidimensionnels étant mémorisé dans la base de données centrale pour être accessible par l'entité, le procédé d'authentification comprenant :
- la fourniture par la personne à une unité de traitement détenue par l'entité du premier groupe de codes bidimensionnels,
- le regroupement du premier groupe de codes bidimensionnels avec le deuxième groupe de codes bidimensionnels,
- la transformation de chaque code bidimensionnel en un fichier élémentaire,
- la réunion des fichiers élémentaires en un fichier d'identification,
- l'extraction de données d'identification du fichier d'identification, et
- l'authentification de la personne à partir des données extraites.

Suivant des modes de mise en oeuvre particuliers, le procédé d'authentification comprend l'une ou plusieurs des caractéristiques suivantes :
- le procédé comprend une étape d'authentification de la personne par mesure d'au moins une donnée sur la personne et comparaison de la donnée mesurée à une donnée d'identification correspondante extraite ;
- le procédé comprend, avant l'étape de réunion, une étape d'identification d'informations d'ordonnancement contenues dans au moins un fichier élémentaire, l'étape de réunion comprenant la concaténation des fichiers élémentaires suivant un ordre défini par les informations d'ordonnancement pour former le fichier d'identification.

D'autres caractéristiques et avantages de l'invention apparaîtront à la lecture de la description qui suit de modes de réalisation de l'invention donnés à titre d'exemple uniquement et en référence aux dessins qui sont :
- figure 1, une représentation schématique d'une entité, d'une base de données centrale, d'une personne et d'un dispositif de génération d'un accès pour l'entité à des données d'identification de la personne,
- figure 2, une vue schématique de la base de données centrale de la figure 1 et d'un équipement d'authentification détenu par l'entité de la figure 1,
- figure 3, un organigramme d'un procédé de génération d'un accès pour une entité à des données d'identification d'une personne, et
- figure 4, un organigramme d'un procédé d'authentification d'une personne par une entité.

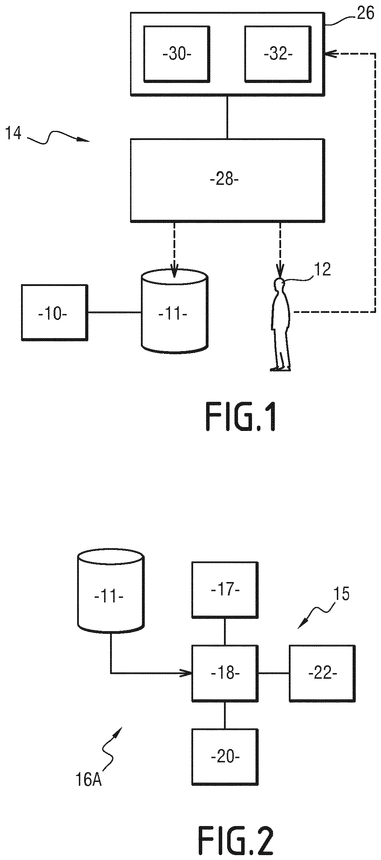

Sur la figure 1, il est illustré schématiquement une entité 10, une base de données centrale 11, une personne 12 et un dispositif 14 de génération d'un accès pour l'entité 10 à des données d'identification de la personne 12.

L'entité 10 est, par exemple, un organisme d'état, telle qu'une administration.

La base de données centrale 11 est propre à mémoriser des données, notamment des données d'identification de la personne 12. L'entité 10 a accès aux informations mémorisées dans la base de données centrale 11. Dans la suite de la description, l'expression « données d'identification » désigne indifféremment des données biographiques et des données biométriques.

Optionnellement, les informations mémorisées dans la base de données centrale 11 sont accessibles par une pluralité d'autres entités 10 prédéfinies.

La personne 12 est un individu identifiable par l'entité 10 à partir de données d'identification.

L'entité 10 détient un équipement d'authentification 15 illustré sur la figure 2. L'équipement d'authentification 15 comprend au moins un terminal 16A relié en réseau à la base de données centrale 11.

Le terminal 16A est, par exemple, un ordinateur.

Le terminal 16A comprend une unité 17 de lecture de codes bidimensionnels, une unité 18 de traitement de données et, optionnellement, une unité d'affichage 20 et une unité de mesure 22.

L'unité de lecture 17 est propre à lire des codes bidimensionnels, tels que des codes QR (abréviation anglaise de « Quick Response » traduit en français par « Réponse Rapide »). Un code QR est un code-barres en deux dimensions formé de modules noirs disposés dans un carré à fond blanc, l'agencement des modules noirs dans le carré à fond blanc définissant l'information que contient le code.

L'unité de traitement de données 18 du terminal 16A comprend un processeur et une mémoire.

L'unité de traitement de données 18 du terminal 16A est propre à mettre en oeuvre un procédé d'authentification de la personne 12 qui sera décrit plus en détails dans la suite de la description.

L'unité d'affichage 20 est, par exemple, un écran.

L'unité de mesure 22 comprend, par exemple, des lecteurs d'informations biométriques sur la personne tels qu'une caméra permettant la prise de photographies ou d'images de l'iris, ainsi qu'un scanner propre à saisir une représentation numérique des empreintes digitales de la personne.

Dans l'exemple illustré sur la figure 1, le dispositif de génération 14 comprend une unité 26 de recueil de données d'identification et une unité 28 de traitement de données.

L'unité de recueil 26 comprend une interface homme-machine 30 et des lecteurs 32 de collecte d'informations biométriques.

L'interface homme-machine 30 comprend, par exemple, un écran et un clavier permettant la saisie d'informations, notamment relatives à l'identité civile de la personne 12 couramment désignée par « porteur ».

Les lecteurs 32 sont, par exemple, des lecteurs d'informations biométriques sur la personne, tels qu'une caméra permettant la prise de photographies ou d'images de l'iris ainsi qu'un scanner propre à saisir une représentation numérique des empreintes digitales de la personne.

L'unité de traitement de données 28 du dispositif de génération 14 comprend un processeur et une mémoire.

L'unité de traitement de données 28 du dispositif de génération 14 est propre à mettre en oeuvre un procédé de génération d'un accès pour l'entité 10 à des données d'identification de la personne 12 qui sera décrit plus en détails dans la suite de la description.

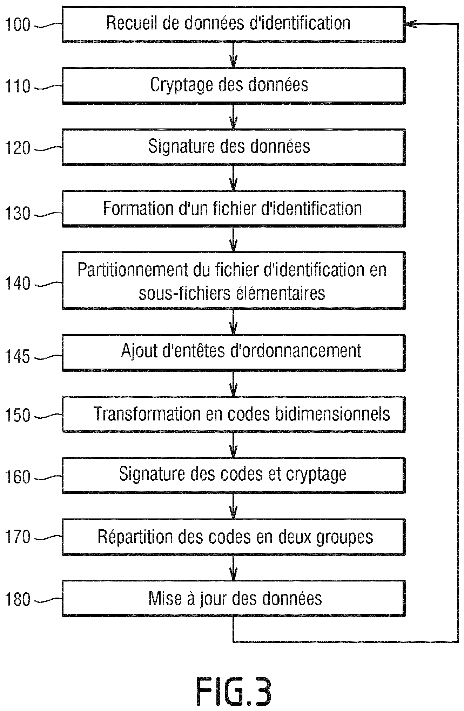

Un exemple d'un tel procédé de génération d'un accès pour l'entité 10 à des données d'identification de la personne 12 va maintenant être décrit en référence à l'organigramme de la figure 3.

Lors d'une étape 100, l'unité de recueil 26 recueille des données d'identification de la personne 12. Comme décrit précédemment de telles données sont aussi bien des données biographiques telles que l'état civil de la personne 12, que des données biométriques. L'état civil de la personne 12 comprend, notamment, le nom, le prénom, la date de naissance et la nationalité de la personne 12.

En particulier, les données biographiques de la personne 12 sont recueillies par l'interface homme-machine 30. Les données biométriques sont collectées directement sur la personne 12 au moyen des lecteurs 32. Par exemple, une photo de la personne 12 est réalisée à partir d'une caméra et plusieurs empreintes digitales sont recueillies à partir d'un scanner.

Les données d'identification recueillies par l'interface homme-machine 30 et les lecteurs 32 sont mémorisées temporairement dans l'unité de traitement de données 28 du dispositif de génération 14.

A l'issue de l'étape 100 de recueil, le procédé de génération comprend une étape optionnelle 110 de cryptage par l'unité de traitement 28 de chaque ou d'au moins une donnée d'identification recueillie.

L'algorithme de cryptage utilisé est, par exemple, un algorithme de cryptage asymétrique de type RSA.

Le procédé de génération comprend, ensuite, une étape optionnelle 120 d'affectation d'une signature à chaque ou à au moins une donnée d'identification. De préférence, les données d'identification sont signées une à une. La signature d'une donnée est un code qui caractérise ladite donnée. La clé permettant de vérifier la signature est transmise à la base de données centrale 11. Ainsi, lors de la vérification de la signature, lorsque la donnée a été altérée ou modifiée, la signature n'est pas reconnue.

Les données sont, alors, regroupées par l'unité de traitement de données 28 lors d'une étape 130 pour former un fichier d'identification F_{ID}. Les données d'identification sont concaténées et organisées dans le fichier d'identification F_{ID} selon un format défini.

En complément facultatif, le fichier d'identification F_{ID} est crypté selon un algorithme de cryptage. Un tel algorithme de cryptage est, par exemple, un algorithme de cryptage asymétrique de type RSA.

Puis, lors d'une étape 140, l'unité de traitement de données 28 partitionne le fichier d'identification F_{ID} en au moins deux fichiers élémentaires F_{ID}ⁱ. Les fichiers élémentaires F_{ID}ⁱ sont tels que la concaténation dans un ordre défini de l'ensemble des fichiers élémentaires F_{ID}ⁱ donne le fichier d'identification F_{ID}.

Lors d'une étape optionnelle 145, une information d'ordonnancement des fichiers élémentaires F_{ID}ⁱ est ajoutée dans un ou plusieurs fichiers élémentaires F_{ID}ⁱ pour permettre leur concaténation ultérieure dans l'ordre du partitionnement initial.

Par exemple, l'élément de partitionnement ajouté au début de chaque fichier élémentaire est une lettre a, b, c... suivant l'ordre lexicographique et correspondant à l'ordre de partitionnement des fichiers élémentaires.

Ainsi, un fichier élémentaire ordonnancé a+ F_{ID}¹ est obtenu par concaténation de la lettre a et du fichier élémentaire F_{ID}¹.

De même, un fichier élémentaire ordonnancé b+ F_{ID}² est obtenu en tant que second fichier par ajout de la lettre b au début du fichier élémentaire F_{ID}².

Plus généralement, chaque fichier élémentaire ordonnancé s'écrit sous la forme eᵢ+ F_{ID}ⁱ où eᵢ est un entête correspondant au rang i parmi un ensemble d'entêtes ordonnés {e₁, e₂..., eᵢ..., eₙ} et F_{ID}ⁱ est le i^{e} fichier élémentaire obtenu lors du partitionnement du fichier d'identification F_{ID}.

Dans la suite de la description, le terme « fichier élémentaire F_{ID}ⁱ », désigne un fichier élémentaire qu'il soit ordonnancé ou non.

En complément facultatif, une signature est affectée à chacun des fichiers élémentaires F_{ID}ⁱ. La clé permettant de vérifier la signature est transmise à la base de données centrale 11. Ainsi, lors de la vérification, lorsqu'un fichier élémentaire a été altéré, la signature n'est pas reconnue.

En complément facultatif alternatif, une signature est affectée à l'ensemble des fichiers élémentaires F_{ID}ⁱ. La clé permettant de vérifier la signature est transmise à la base de données centrale 11. Ainsi, lors de la vérification, lorsqu'un fichier élémentaire est manquant, la signature n'est pas reconnue.

Chaque fichier élémentaire F_{ID}ⁱ est, ensuite, transformé, lors d'une étape 150, en un code bidimensionnel par l'unité de traitement de données 28.

Chaque code bidimensionnel est lisible par une unité de lecture indépendamment des autres codes. L'information contenue dans chaque code bidimensionnel comprend des portions de données biographiques, tel que l'état civil et/ou des portions de données biométriques, telles qu'une photographie, des empreintes digitales, ou un ou deux iris. Dans la mesure où l'information contenue dans chaque donnée d'identification est répartie entre plusieurs codes bidimensionnels, l'ensemble desdits codes bidimensionnels est requis pour reconstituer ladite donnée.

De tels codes bidimensionnels sont, par exemple, des codes QR. De tels codes QR répondent, par exemple, à la norme ISO/IEC18004.

En variante, de tels codes bidimensionnels sont des datamatrix selon la norme ISO/CEI 16022.

Le procédé de génération comprend, ensuite, une étape optionnelle 160 d'assignation d'une signature commune à l'ensemble des codes bidimensionnels. La signature commune est un code qui caractérise la somme de l'ensemble des codes bidimensionnels. La clé permettant de vérifier la signature commune est transmise à la base de données centrale 11. Ainsi, lors de la vérification de la signature, en l'absence de l'un des codes bidimensionnels, la signature n'est pas reconnue.

En complément facultatif, l'étape de signature 160 comprend, également, le cryptage de l'ensemble des codes bidimensionnels. L'algorithme de cryptage utilisé est, par exemple, un algorithme de cryptage asymétrique de type RSA.

En complément facultatif alternatif, l'étape de signature 160 comprend le cryptage de chaque ou d'au moins un code bidimensionnel. L'algorithme de cryptage utilisé est, par exemple, un algorithme de cryptage asymétrique de type RSA.

Puis, lors d'une étape 170, les codes bidimensionnels sont répartis en au moins deux groupes de codes bidimensionnels.

La répartition des codes bidimensionnels en différents groupes de codes bidimensionnels est faite, par exemple, de manière aléatoire.

En outre, un identifiant commun est affecté à chacun du premier et du deuxième groupe de codes bidimensionnels. L'identifiant commun est, par exemple, une suite de chiffres ou encore le nom et/ou le prénom de la personne 12.

Le premier groupe de codes bidimensionnels et le deuxième groupe de codes bidimensionnels sont mémorisés sur des supports distincts. Il est entendu par le terme « supports distincts », des supports physiquement différents bien que susceptibles d'être de même nature. De tels supports sont, par exemple, des supports physiques tels qu'une carte ou encore des supports numériques, telles que la mémoire d'un processeur ou une clé USB.

Le support mémorisant le premier groupe de codes bidimensionnels est délivré à la personne 12. Un tel support est, par exemple, une carte d'identité ou dans le cas d'un support numérique : une clé USB, la mémoire d'un smartphone ou d'un ordinateur.

Le support mémorisant le deuxième groupe de codes bidimensionnels est accessible par l'entité 10. En pratique, le deuxième groupe de codes bidimensionnels est envoyé et mémorisé, par exemple au format numérique, dans la base de données centrale 11.

Optionnellement, le procédé de génération comprend une étape 180 de mise à jour de l'accès aux données d'identification lorsque les données d'identification sont mises à jour. L'étape 180 de mise à jour consiste à répéter l'intégralité des étapes du procédé de génération en prenant en compte les données d'identification mise à jour.

En variante, l'étape de mise à jour 180 consiste, lorsqu'une nouvelle donnée d'identification de la personne 12 est disponible, à générer au moins deux codes bidimensionnels à partir de la nouvelle donnée suivant le procédé de génération tel que décrit précédemment. Puis, l'étape de mise à jour 180 comprend la mémorisation, d'une part, du premier groupe de codes bidimensionnels et de l'un des codes additionnels générés sur un support destiné à être détenu par la personne 12 et, d'autre part, de l'autre code additionnel généré sur un support accessible par l'entité 10. Le support destiné à être détenu par la personne 12 et sur lequel est mémorisé l'un des codes additionnels est éventuellement différent du support sur lequel avait été initialement mémorisé le premier groupe de codes.

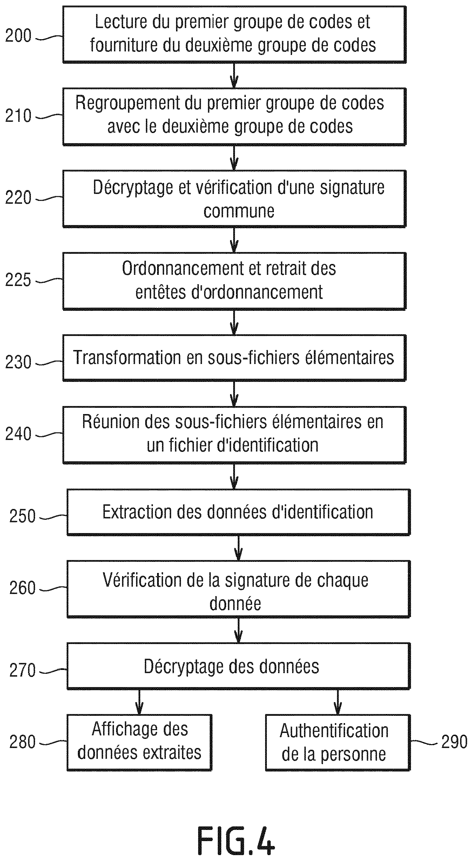

Un exemple d'un procédé d'authentification de la personne 12 par l'entité 10 va maintenant être décrit en référence à l'organigramme de la figure 4. La mise en oeuvre d'un tel procédé d'authentification suppose que la personne 12 détienne le premier groupe de codes bidimensionnels généré lors du procédé de génération décrit précédemment et que le deuxième groupe de codes bidimensionnels généré à partir du même procédé soit mémorisé dans la base de données centrale 11 pour être accessible par l'entité 10.

Lors d'une étape 200, l'unité de lecture 17 du terminal 16A procède à la lecture du premier groupe de codes bidimensionnels fourni par la personne 12 et à la lecture de l'identifiant affecté audit premier groupe de codes. Les codes bidimensionnels lus sont mémorisés temporairement dans l'unité de traitement 18 du terminal 16A.

En parallèle, la base de données centrale 11 fournit, à l'unité de traitement 18 du terminal 16A, le deuxième groupe de codes bidimensionnels correspondant à l'identifiant lu par l'unité de lecture 17.

Puis, lors d'une étape 210, l'unité de traitement 18 regroupe le premier groupe de codes bidimensionnels avec le deuxième groupe de codes bidimensionnels.

En complément facultatif, le procédé d'authentification comprend une étape d'information de la personne 12 du regroupement des deux groupes de codes. Ainsi, la personne 12 est informée que ses données d'identification sont utilisées et peut alors engager une action si elle n'est pas à l'origine d'un tel regroupement.

L'unité de traitement 18 procède également, le cas échéant, lors d'une étape 220, au décryptage des codes bidimensionnels qui avaient été cryptés lors du procédé de génération.

L'étape 220 comprend, également, le cas échéant, la vérification de la signature commune attribuée aux codes bidimensionnels regroupés, à partir de la signature correspondante communiquée par la base de données 11. Lorsque la signature commune n'est pas reconnue, la personne 12 n'est pas authentifiée. Par conséquent, lorsque le procédé d'authentification vise à autoriser ou non l'accès de la personne 12 à un lieu prédéfini, l'accès au lieu est refusé à la personne 12.

Lors d'une étape 225, l'unité de traitement 18 ordonne, le cas échéant, les données brutes contenues dans l'ensemble des codes selon l'information d'ordonnancement eᵢ contenue dans l'entête des données desdits codes. L'entête des données de chaque code est, ensuite, supprimé. L'information d'ordonnancement est mémorisée temporairement dans l'unité de traitement de données 18.

Lorsque les fichiers élémentaires F_{ID}ⁱ ont été signés, l'unité de traitement 18 procède à la vérification de la signature, à partir de la signature correspondante communiquée par la base de données 11. Lorsque la signature n'est pas reconnue, la personne 12 n'est pas authentifiée. Par conséquent, lorsque le procédé d'authentification vise à autoriser ou non l'accès de la personne 12 à un lieu prédéfini, l'accès au lieu est refusé à la personne 12.

Puis, lors d'une étape 230, l'unité de traitement 18 transforme chaque code bidimensionnel en un fichier élémentaire F_{ID}ⁱ. La transformation consiste en l'opération inverse de celle ayant permis d'obtenir les codes bidimensionnels lors du procédé de génération.

L'unité de traitement 18 procède alors, lors d'une étape 240, à la réunion des fichiers élémentaires F_{ID}ⁱ pour former un unique fichier d'identification F_{ID}. Une telle réunion consiste à concaténer les fichiers élémentaires obtenus suivant l'ordre défini par les entêtes d'ordonnancement eᵢ.

Lorsque le fichier d'identification F_{ID} est crypté, l'unité de traitement 18 procède au décryptage du fichier.

L'unité de traitement 18 extrait, ensuite, lors d'une étape 250, les données d'identification contenues dans le fichier d'identification F_{ID}.

Puis, le cas échéant, lors d'une étape 260, l'unité de traitement 18 procède à la vérification de la signature attribuée à chaque donnée d'identification, à partir de la signature correspondante communiquée par la base de données 16B.

Lorsque la signature d'une donnée n'est pas reconnue, la personne 12 n'est pas authentifiée. Par conséquent, lorsque le procédé d'authentification vise à autoriser ou non l'accès de la personne 12 à un lieu prédéfini, l'accès au lieu est refusé à la personne 12.

Les données d'identification sont ensuite, le cas échéant, décryptées par l'unité de traitement 18 lors d'une étape 270 et mises à disposition de l'entité 10.

Optionnellement, le procédé d'authentification comprend une étape d'affichage 280 des données d'identification extraites sur l'unité d'affichage 22.

Optionnellement, le procédé d'authentification comprend une étape 290 d'authentification de la personne 12 consistant à mesurer au moyen de l'unité de mesure 22 au moins une donnée biométrique de la personne et à comparer la donnée biométrique mesurée à au moins une donnée d'identification biométrique correspondante extraite.

Ainsi, les procédés et dispositifs décrits permettent de mettre en place un accès sécurisé à des données d'identification d'une personne par une entité.

Dans la mesure où les codes bidimensionnels sont mémorisés sur deux supports distincts et que l'accès aux données d'identification suppose d'avoir accès à l'ensemble des codes bidimensionnels, le risque de vol des données est réduit.

En outre, un tel procédé d'authentification ne pose pas de problème de protection des données personnelles. En effet, les données d'identification sous forme de codes bidimensionnels sont réparties entre l'entité 10 et la personne 12. Ainsi, l'entité 10 ne détient, pour chaque donnée, qu'un fragment de données ne permettant pas, seul, de remonter à la donnée d'identification complète de la personne 12.

De plus, dans le cas où le premier groupe de codes bidimensionnels est transmis à la personne 12 sous forme numérique, la mise à jour des données d'identification est facilitée puisque cela ne suppose pas de régénérer un document physique d'identification. En outre, dans la variante décrite ci-dessus, la génération d'un accès à des données d'identification ajoutées implique de seulement réitérer les étapes du procédé de génération pour les seules données ajoutées et non pas pour l'intégralité des données d'identification.

## Revendications

1. Procédé de génération d'un accès pour une entité (10) à des données d'identification d'une personne (12), ladite entité ayant accès à des informations mémorisées dans une base de données centrale (11), le procédé comprenant les étapes de :
- regroupement des données d'identification pour former un fichier d'identification (F_{ID}),
- partitionnement du fichier d'identification (F_{ID}) en au moins deux fichiers élémentaires (F_{ID}ⁱ) complémentaires entre eux,
- transformation de chaque fichier élémentaire (F_{ID}ⁱ) en un code bidimensionnel,
**caractérisé en ce que** le procédé comprend, en outre, une étape de répartition des codes bidimensionnels en au moins deux groupes de codes bidimensionnels, le premier groupe de codes bidimensionnels et le deuxième groupe de codes bidimensionnels étant mémorisés sur des supports distincts, le support mémorisant le premier groupe de codes bidimensionnels étant destiné à être détenu par la personne (12) et le support mémorisant le deuxième groupe de codes bidimensionnels étant accessible par l'entité (10), les données d'identification de la personne (12) étant accessibles seulement lors de la réunion des premier et deuxième groupes de codes bidimensionnels mémorisés sur chacun desdits supports, le deuxième groupe de codes bidimensionnels étant envoyé et mémorisé dans la base de données centrale (11).

2. Procédé selon la revendication 1, dans lequel le procédé comprend une étape de cryptage d'au moins une donnée d'identification, le fichier d'identification (F_{ID}) étant obtenu à partir de la ou des données d'identification cryptées et, le cas échéant, des autres données d'identification non cryptées.

3. Procédé selon la revendication 1 ou 2, dans lequel le procédé comprend une étape d'assignation d'une signature à au moins une donnée d'identification, le fichier d'identification (F_{ID}) étant obtenu à partir de la ou des données d'identification signées et, le cas échéant, des autres données d'identification non signées.

4. Procédé selon l'une quelconque des revendications 1 à 3, dans lequel le procédé comprend, avant l'étape de répartition, une étape d'assignation d'une signature commune à l'ensemble des codes bidimensionnels.

5. Procédé selon l'une quelconque des revendications 1 à 4, dans lequel le procédé comprend, avant l'étape de répartition, une étape de cryptage d'au moins un code bidimensionnel ou de l'ensemble des codes bidimensionnels.

6. Procédé selon l'une quelconque des revendications 1 à 5, dans lequel le procédé comprend, avant l'étape de transformation, une étape d'ajout d'une information d'ordonnancement (eᵢ) à chaque fichier élémentaire (F_{ID}ⁱ), les informations d'ordonnancement (ei) étant représentatives de l'ordre de concaténation des fichiers élémentaires (F_{ID}ⁱ) pour former le fichier d'identification (F_{ID}), l'étape de transformation comprenant, en outre, le codage sur chaque code bidimensionnel de l'information d'ordonnancement (eᵢ) ajoutée au fichier élémentaire (F_{ID}ⁱ) correspondant.

7. Procédé selon l'une quelconque des revendications 1 à 6, dans lequel le procédé comprend, lors de l'étape de répartition, l'affectation d'un identifiant commun au premier et au deuxième groupes de codes bidimensionnels.

8. Procédé selon l'une quelconque des revendications 1 à 7, dans lequel le procédé comprend une étape de mise à jour des codes bidimensionnels lorsqu'une nouvelle donnée d'identification de la personne (12) est disponible, l'étape de mise à jour comprenant la génération d'au moins deux codes bidimensionnels additionnels à partir de la nouvelle donnée selon le procédé de génération de l'une quelconque des revendications 1 à 7, l'étape de mise à jour comprenant, en outre, la mémorisation, d'une part, du premier groupe de codes bidimensionnels et de l'un des codes additionnels générés sur un support destiné à être détenu par la personne (12) et, d'autre part, de l'autre code additionnel généré sur un support accessible par l'entité (10).

9. Dispositif de génération d'un accès pour une entité (10) à des données d'identification d'une personne (12), ladite entité ayant accès à des informations mémorisées dans une base de données centrale (11), le dispositif comprenant :
- une unité de recueil (26) des données d'identification de la personne (12),
- une unité de traitement de données (28) propre à mettre en oeuvre le procédé de génération selon l'une quelconque des revendications 1 à 8.

10. Procédé d'authentification d'une personne (12) par une entité (10), la personne (12) détenant un premier groupe de codes bidimensionnels, l'entité (10) ayant accès à un deuxième groupe de codes bidimensionnels, le premier groupe et le deuxième groupe de codes bidimensionnels étant obtenus par le procédé de génération selon l'une quelconque des revendication 1 à 8, le deuxième groupe de codes bidimensionnels étant mémorisé dans la base de données centrale (11) pour être accessible par l'entité (10), le procédé d'authentification comprenant :
- la fourniture par la personne (12) à une unité de traitement (18) détenue par l'entité (10) du premier groupe de codes bidimensionnels,
- le regroupement du premier groupe de codes bidimensionnels avec le deuxième groupe de codes bidimensionnels,
- la transformation de chaque code bidimensionnel en un fichier élémentaire (F_{ID}ⁱ),
- la réunion des fichiers élémentaires (F_{ID}ⁱ) en un fichier d'identification (F_{ID}),
- l'extraction de données d'identification du fichier d'identification (F_{ID}), et
- l'authentification de la personne (12) à partir des données extraites.

11. Procédé selon la revendication 10, dans lequel le procédé comprend une étape d'authentification de la personne (12) par mesure d'au moins une donnée sur la personne (12) et comparaison de la donnée mesurée à une donnée d'identification correspondante extraite.

12. Procédé selon la revendication 10 ou 11, dans lequel le procédé comprend, avant l'étape de réunion, une étape d'identification d'informations d'ordonnancement (eᵢ) contenues dans au moins un fichier élémentaire (F_{ID}ⁱ), l'étape de réunion comprenant la concaténation des fichiers élémentaires (F_{ID}ⁱ) suivant un ordre défini par les informations d'ordonnancement (eᵢ) pour former le fichier d'identification (F_{ID}).

## Patentansprüche

1. Verfahren zur Generierung eines Zugangs für eine Entität (10) zu Identifikationsdaten einer Person (12), wobei die genannte Entität Zugang zu Informationen hat, die in einer zentralen Datenbank (11) gespeichert sind, wobei das Verfahren die folgenden Schritte beinhaltet:
- Gruppieren der Identifikationsdaten, um eine Identifikationsdatei (F_{ID}) zu bilden,
- Partitionieren der Identifikationsdatei (F_{ID}) in mindestens zwei zueinander komplementäre Elementardateien (F_{ID}ⁱ),
- Umwandeln jeder Elementardatei (F_{ID}ⁱ) in einen zweidimensionalen Code,
**dadurch gekennzeichnet, dass** das Verfahren außerdem einen Schritt des Aufteilens der zweidimensionalen Codes in mindestens zwei Gruppen von zweidimensionalen Codes beinhaltet, wobei die erste Gruppe von zweidimensionalen Codes und die zweite Gruppe von zweidimensionalen Codes auf getrennten Trägern gespeichert sind, wobei das die erste Gruppe von zweidimensionalen Codes speichernde Medium zum Halten durch die Person (12) bestimmt ist und das die zweite Gruppe von zweidimensionalen Codes speichernde Medium für die Entität (10) zugänglich ist, wobei die Identifikationsdaten der Person (12) nur bei der Vereinigung der ersten und zweiten Gruppe von auf jedem der genannten Medien gespeicherten zweidimensionalen Codes zugänglich sind, wobei die zweite Gruppe von zweidimensionalen Codes gesendet und in der zentralen Datenbank (11) gespeichert wird.

2. Verfahren nach Anspruch 1, wobei das Verfahren einen Schritt des Verschlüsselns mindestens eines Identifikationsdatenelements beinhaltet, wobei die Identifikationsdatei (F_{ID}) auf der Basis der ein oder mehreren verschlüsselten Identifikationsdatenelemente und gegebenenfalls der anderen nicht verschlüsselten Identifikationsdatenelemente erhalten wird.

3. Verfahren nach Anspruch 1 oder 2, wobei das Verfahren einen Schritt des Zuweisens einer Signatur zu mindestens einem Identifikationsdatenelement beinhaltet, wobei die Identifikationsdatei (F_{ID}) auf der Basis der ein oder mehreren signierten Identifikationsdatenelemente und gegebenenfalls der anderen nicht signierten Identifikationsdatenelemente erhalten wird.

4. Verfahren nach einem der Ansprüche 1 bis 3, wobei das Verfahren vor dem Schritt des Aufteilens einen Schritt des Zuweisens einer gemeinsamen Signatur zu der Gesamtheit der zweidimensionalen Codes beinhaltet.

5. Verfahren nach einem der Ansprüche 1 bis 4, wobei das Verfahren vor dem Aufteilungsschritt einen Schritt des Verschlüsselns mindestens eines zweidimensionalen Codes oder der Gesamtheit der zweidimensionalen Codes beinhaltet.

6. Verfahren nach einem der Ansprüche 1 bis 5, wobei das Verfahren vor dem Umwandlungsschritt einen Schritt des Hinzufügens eines Ordnungsinformationselements (eᵢ) zu jeder Elementardatei (F_{ID}ⁱ) beinhaltet, wobei die Ordnungsinformationen (eᵢ) für die Reihenfolge der Verkettung der Elementardateien (F_{ID}ⁱ) repräsentativ sind, um die Identifikationsdatei (F_{ID}) zu bilden, wobei der Umwandlungsschritt außerdem das Codieren des der entsprechenden Elementardatei (F_{ID}ⁱ) hinzugefügten Ordnungsinformationselements (eᵢ) auf jeden zweidimensionalen Code beinhaltet.

7. Verfahren nach einem der Ansprüche 1 bis 6, wobei das Verfahren im Aufteilungsschritt das Zuordnen einer gemeinsamen Kennung zur ersten und zweiten Gruppe von zweidimensionalen Codes beinhaltet.

8. Verfahren nach einem der Ansprüche 1 bis 7, wobei das Verfahren einen Schritt des Aktualisierens der zweidimensionalen Codes beinhaltet, wenn ein neues Identifikationsdatenelement der Person (12) verfügbar ist, wobei der Aktualisierungsschritt das Generieren von mindestens zwei zusätzlichen zweidimensionalen Codes auf der Basis des neuen Datenelements gemäß dem Generierungsverfahren nach einem der Ansprüche 1 bis 7 beinhaltet, wobei der Aktualisierungsschritt außerdem das Speichern einerseits der ersten Gruppe von zweidimensionalen Codes und eines der generierten zusätzlichen Codes auf einem Medium, das von der Person (12) gehalten werden soll, und andererseits des anderen generierten zusätzlichen Codes auf einem für die Entität (10) zugänglichen Medium beinhaltet.

9. Gerät zur Generierung eines Zugangs für eine Entität (10) zu Identifikationsdaten einer Person (12), wobei die genannte Entität Zugang zu Informationen hat, die in einer zentralen Datenbank (11) gespeichert sind, wobei das Gerät Folgendes umfasst:
- eine Einheit (26) zum Sammeln der Identifikationsdaten der Person (12),
- eine Datenverarbeitungseinheit (28), die zum Durchführen des Generierungsverfahrens nach einem der Ansprüche 1 bis 8 geeignet ist.

10. Verfahren zur Authentifizierung einer Person (12) durch eine Entität (10), wobei die Person (12) eine erste Gruppe von zweidimensionalen Codes hält, wobei die Entität (10) Zugang zu einer zweiten Gruppe von zweidimensionalen Codes hat, wobei die erste Gruppe und die zweite Gruppe von zweidimensionalen Codes durch das Generierungsverfahren nach einem der Ansprüche 1 bis 8 erhalten werden, wobei die zweite Gruppe von zweidimensionalen Codes in der zentralen Datenbank (11) gespeichert wird, sodass sie der Entität (10) zugänglich ist, wobei das Authentifizierungsverfahren Folgendes beinhaltet:
- Bereitstellen, durch die Person (12), der ersten Gruppe von zweidimensionalen Codes einer von der Entität (10) gehaltenen Verarbeitungseinheit (18),
- Gruppieren der ersten Gruppe von zweidimensionalen Codes mit der zweiten Gruppe von zweidimensionalen Codes,
- Umwandeln jedes zweidimensionalen Codes in eine Elementardatei (F_{ID}ⁱ),
- Vereinigen der Elementardateien (F_{ID}ⁱ) in eine Identifikationsdatei (F_{ID}),
- Extrahieren von Identifikationsdaten aus der Identifikationsdatei (F_{ID}), und
- Authentifizieren der Person (12) auf der Basis der extrahierten Daten.

11. Verfahren nach Anspruch 10, wobei das Verfahren einen Schritt des Authentifizierens der Person (12) durch Messen mindestens eines Datenelements über die Person (12) und Vergleichen des gemessenen Datenelements mit einem entsprechenden extrahierten Identifikationsdatenelement beinhaltet.

12. Verfahren nach Anspruch 10 oder 11, wobei das Verfahren vor dem Vereinigungsschritt einen Schritt des Identifizierens von in mindestens einer Elementardatei (F_{ID}ⁱ) enthaltenen Ordnungsinformationen (eᵢ) beinhaltet, wobei der Vereinigungsschritt das Verketten der Elementardateien (F_{ID}ⁱ) gemäß einer durch die Ordnungsinformationen (eᵢ) definierten Reihenfolge beinhaltet, um die Identifikationsdatei (F_{ID}) zu bilden.

## Claims

1. Method for generating an access for an entity (10) to identification data of a person (12), said entity having access to information stored in a central database (11), the method comprising the steps of:
- grouping the identification data together to form an identification file (F_{ID}),
- partitioning the identification file (F_{ID}) into at least two mutually complementary elementary files (F_{ID}ⁱ),
- converting each elementary file (F_{ID}ⁱ) into a two-dimensional code,
**characterized in that** the method moreover comprises a step of dividing the two-dimensional codes into at least two groups of two-dimensional codes, the first group of two-dimensional codes and the second group of two-dimensional codes being stored on separate media, the medium storing the first group of two-dimensional codes being intended to be held by the person (12) and the medium storing the second group of two-dimensional codes being accessible by the entity (10), the identification data of the person (12) being accessible only when the first and second groups of two-dimensional codes stored on each of said media are combined, the second group of two-dimensional codes being sent to and stored in the central database (11).

2. Method according to claim 1, in which the method comprises a step of encrypting at least one identification data item, the identification file (F_{ID}) being obtained on the basis of the encrypted identification data item or items and, if applicable, other unencrypted identification data items.

3. Method according to claim 1 or 2, in which the method comprises a step of assigning a signature to at least one identification data item, the identification file (F_{ID}) being obtained on the basis of the signed identification data item or items and, if applicable, other unsigned identification data items.

4. Method according to any one of claims 1 to 3, in which the method comprises, before the dividing step, a step of assigning a common signature to all of the two-dimensional codes.

5. Method according to any one of claims 1 to 4, in which the method comprises, before the dividing step, a step of encrypting at least one two-dimensional code or all of the two-dimensional codes.

6. Method according to any one of claims 1 to 5, in which the method comprises, before the conversion step, a step of adding an sequencing information item (eᵢ) to each elementary file (F_{ID}ⁱ), the sequencing information (eᵢ) representing the order of concatenation of the elementary files (F_{ID}ⁱ) to form the identification file (F_{ID}), the conversion step moreover comprising the coding of the sequencing information item (eᵢ) added to the corresponding elementary file (F_{ID}ⁱ) on each two-dimensional code.

7. Method according to any one of claims 1 to 6, in which the method comprises, during the dividing step, the allocation of a common identifier to the first and to the second group of two-dimensional codes.

8. Method according to any one of claims 1 to 7, in which the method comprises a step of updating the two-dimensional codes when a new identification data item of the person (12) is available, the updating step comprising the generation of at least two additional two-dimensional codes on the basis of the new data item according to the generation method of any one of claims 1 to 7, the updating step moreover comprising the storing, on the one hand, of the first group of two-dimensional codes and one of the generated additional codes on a medium intended to be held by the person (12) and, on the other hand, of the other generated additional code on a medium accessible by the entity (10).

9. Device for generating an access for an entity (10) to identification data of a person (12), said entity having access to information stored in a central database (11), the device comprising:
- a unit for collecting (26) the identification data of the person (12),
- a data processing unit (28) suitable for implementing the generation method according to any one of claims 1 to 8.

10. Method for authenticating a person (12) by an entity (10), the person (12) holding a first group of two-dimensional codes, the entity (10) having access to a second group of two-dimensional codes, the first group and the second group of two-dimensional codes being obtained by the generation method according to any one of claims 1 to 8, the second group of two-dimensional codes being stored in the central database (11) to be accessible by the entity (10), the authentication method comprising:
- providing, by the person (12), the first group of two-dimensional codes to a processing unit (18) held by the entity (10),
- grouping the first group of two-dimensional codes together with the second group of two-dimensional codes,
- converting each two-dimensional code into an elementary file (F_{ID}ⁱ),
- combining the elementary files (F_{ID}ⁱ) into an identification file (F_{ID}),
- extracting identification data from the identification file (F_{ID}), and
- authenticating the person (12) on the basis of the extracted data.

11. Method according to claim 10, in which the method comprises a step of authenticating the person (12) by measuring at least one data item about the person (12) and comparing the measured data item to a corresponding extracted identification data item.

12. Method according to claim 10 or 11, in which the method comprises, before the combining step, a step of identifying sequencing information (eᵢ) contained in at least one elementary file (F_{ID}ⁱ), the combining step comprising the concatenation of the elementary files (F_{ID}ⁱ) in an order defined by the sequencing information (eᵢ) to form the identification file (F_{ID}).
